Europäisches Patentamt

European Patent Office

Office européen des brevets

(11) Publication number: **0 178 300**
**B1**

# EUROPEAN PATENT SPECIFICATION

(45) Date of publication of patent specification: **24.01.90**

(51) Int. Cl.⁵: **F 16 D 1/08**

(21) Application number: **84901791.8**

(22) Date of filing: **02.05.84**

(86) International application number:
**PCT/GB84/00148**

(87) International publication number:
**WO 84/04367 08.11.84 Gazette 84/26**

(54) **HYDRAULIC FRICTIONAL COUPLING.**

(30) Priority: **05.05.83 GB 8312373**
**30.09.83 GB 8326176**
**09.12.83 GB 8333006**

(43) Date of publication of application:
**23.04.86 Bulletin 86/17**

(45) Publication of the grant of the patent:
**24.01.90 Bulletin 90/04**

(84) Designated Contracting States:
**AT BE CH DE FR GB LI LU NL SE**

(56) References cited:
**GB-A- 950 728**
**GB-A-1 230 519**
**GB-A-2 023 256**
**US-A-2 293 085**

(73) Proprietor: **JELFS, Stewart Dudley**
**3 Northwick Road Worcester**
**Hereford & Worcester WR3 7DR (GB)**

(72) Inventor: **JELFS, Stewart Dudley**
**3 Northwick Road Worcester**
**Hereford & Worcester WR3 7DR (GB)**

(74) Representative: **Weitzel, Wolfgang, Dr.-Ing.**
**St. Pöltener Strasse 43**
**D-7920 Heidenheim (DE)**

Courier Press, Leamington Spa, England.

## Description

### 1. Field of the invention.

This invention relates to frictional locking couplings used, for example, in mechanical power transmission systems to fasten two shafts together, or to fasten two components to one another in such a manner as to resist axial thrust, or even a combination of the two.

The invention especially relates to a coupling for frictionally joining two components comprising a housing provided with at least one annular piston and two working chambers at each end thereof and means for supplying fluid under pressure to said working chambers to axially move said piston in said housing, the housing and the piston being of generally cylindrical shape and at least one of the peripheral surfaces of said piston being tapered.

### 2. Description of the prior art.

For many years, in the field of mechanical power transmission, the use of keys and keyways has been accepted practice, although the severe stress concentration in shafts due to keyseats has long been recognised as one of the prime causes of failure due to fatigue. Furthermore, press-fitting is often employed in conjunction with a key and this accentuates the problems of mounting and dismounting whilst compounding the effect of stress concentration.

A coupling of the type mentioned is known from GB—A—1230519. It is a disengageable collet which, due to its conical shape, can be axially pretensioned by means of a piston to quickly lock a shaft against axial movement and rotation. The lock is also intended to permit rapid release. The contact surface between the shaft or rod on one hand and the sleeve surrounding it and holding it by frictional force is very short and consequently highly stressed. This device is therefore unsuitable for the transmission of very high torques. Moreover, the contact surface between clamping sleeve and rod to be located has a large conical gap so that considerable deformation work is necessary within the collet. The annular piston is under axial spring tension causing an at least provisional locking of the rod or shaft in relieved condition. Nevertheless, pressure medium has to be applied to achieve a definite location, which may lead to sealing problems between the internal pressure chamber and the outlet borehole for the shaft in the clamping device. To obtain a permanent location of the device and the shaft or rod, medium therefore has to be constantly supplied at a high pressure.

Also known from GB—A—950728 is a quick-release coupling suitable especially for temporary engagement and disengagement of hub-like parts on a shaft, i.e. for shifting operations. Axially displaceable wedges are arranged in the hub-shaped part for this purpose which are subjected to pressure from piston and cylinder units on both sides. Rolling elements between each wedge and the shaft are to permit a temporary rolling motion of the hub, e.g. a gearwheel. With this arrangement, a torque can be temporarily transmitted between the shaft and the hub, but only as long as a piston/cylinder unit exerts an axial force onto the wedges.

Furthermore, the transmission of the axial force onto the wedges inside the hub has to be effected via thrust bearings because the piston/cylinder units are torsionally rigidly connected to the housing. Due to the step flanks of the wedges and the rotating design of the axial force introduction mechanism, this coupling is unsuitable for transmitting high static torques as they occur for instance in heavy-duty machine construction.

A connection between a hub and a shaft designed as hollow shaft is known from US—A—2293085. A piston in a cylinder subjected to pressure medium or a thrust screw exert an axial force onto a tapered mandrel so that a sleeve surrounding rolling elements on the tapered surface of the mandrel is radially expanded via these rolling elements. The rolling elements roll on corresponding races in an axial direction on the mandrel and distribute the radial force over various points along the axial length of the coupling and the circumference of the sleeve. In this way, it will be possible to produce a clamping force for frictional locking of a hub, but this clamping force will not be evenly distributed. A wave-like deformation of the hollow shaft in circumferential and axial direction on both sides of the hub will therefore result. Hub components that have to remain absolutely concentric, e.g. gearwheels or sensitive rolls, cannot be locked precisely with this coupling. Moreover, a method for releasing the coupling has not been proposed. This coupling of the prior art is of especially light design which makes it unsuitable for transmitting high torque values in heavy-duty machine construction. Additionally, it presupposes the existence of a hollow shaft. Most of these devices use interlocking conical elements which are actuated by means of a ring of screws; these screws must all be tightened in a correct sequence and to a specified torque setting to ensure satisfactory torque-transmitting capacity.

In recent years several types of device have become available which overcome some of the problems outlined above. Most of these devices use interlocking conical tapers which are actuated by means of a ring of screws; these screws must all be tightened in a correct sequence and to a specified torque setting to ensure satisfactory torque-transmitting capacity on the part of the joined components. For small-diameter shafts and light-duty joints this may well be acceptable; however, on large heavy-duty applications the process of tightening the screws becomes extremely tedious and time-consuming. In the course of tightening a single joint it is not uncommon to apply a torque-wrench ten or twelve times to each of perhaps two dozen screws before finally achieving the condition when all are fully tight. If any one screw is found to require further tightening, then the process of tightening this one screw will also necessitate going around all the remaining screws because these will very probably have become loosened as the conical tapers move. Furthermore, the heads of the screws lie in close proximity to the surface of the shaft and this makes it difficult to apply the torque-wrench; in some instances, a special torque-wrench with truncated head is necessary to gain access to the screw heads. The time factor alone makes the fitting process very expensive for practical engineering purposes.

Another method of achieving a joint which is suitable for the transmission of mechanical power and which is readily dismountable is the oil-injection method. This entails injecting oil at very high pressure between mounted components, the oil pressure being slightly in excess of the surface pressure of the interference fit. To facilitate manufacture; the mating surfaces are usually slightly tapered. This is a very reliable method, well-proven in heavy engineering over many years. There are, however, several drawbacks. Firstly, the tapered surfaces are difficult to manufacture accurately with the necessary oil-feed and drainage ducts. Secondly, the finely tapered surfaces render it impossible to achieve accurate axial positioning of the mounted components without using an intermediate sleeve. Thirdly, special external hydraulic tooling has to be provided to supply axial thrust to the joint whilst fitting; normally, two separate hydraulic systems are used, one for radial pressurisation and the other for axial pressurisation.

## Summary of the invention

This invention provides a device for hydraulic frictional locking of two components to one another which overcomes most of the aforementioned difficulties and results in a readily mountable and dismountable joint capable of transmitting high torque and/or resisting axial thrust. This is achieved, essentially, by using an annular coupling, with a housing which is formed as a separate self-contained assembly having a fully enclosed space within which the piston is arranged, the tapered surface of the piston cooperating with a mating tapered surface of the housing defining said space to radially expand or contract at least one wall of the housing into contact with at least one of the two components on axial displacement of said piston. When the piston is displaced in a first axial direction, the coupling assumes a dilated condition in which frictional locking is achieved, and when the piston is displaced in a second axial direction (opposite to the first axial direction) the coupling resumes its undilated condition.

## Brief description of the drawings.

Figure 1 is an axial section through two components joined by a bush according to a first embodiment;

Figure 2 is a view similar to Figure 1 and in which an alternative embodiment of the bush is illustrated;

Figure 3 is an axial section through a third embodiment of a bushing according to the invention;

Figures 4(a) and 4(b) illustrate developments of the internal/external surfaces of two further embodiments of a bush or other type of coupling according to the invention; and

Figures 5(a) and 5(b) illustrate axial sections through two shafts which are connected to one another by two different embodiments of a coupling according to the invention.

## Description of the preferred embodiments.

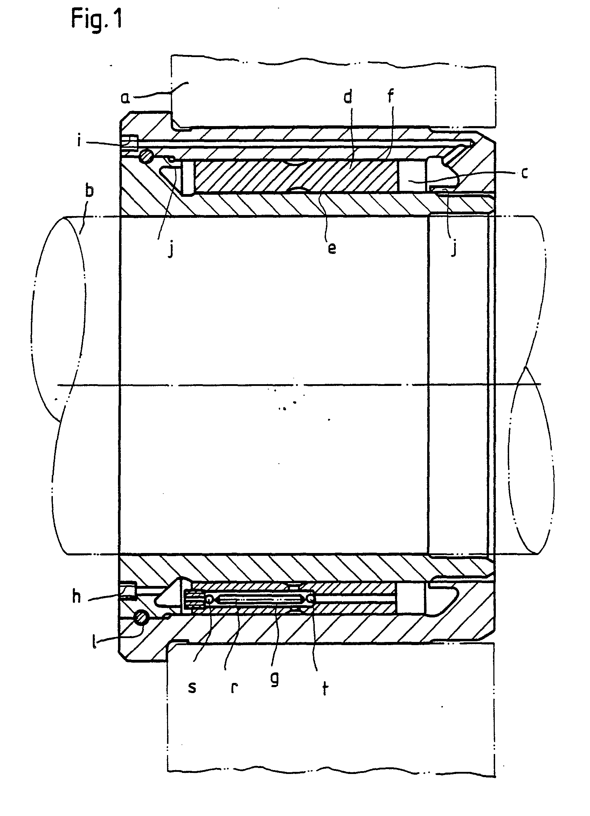

Referring firstly to Figure 1, there is illustrated therein a bush with cylindrical external surfaces which is mounted coaxially between cylindrical surfaces of the outer and inner components a, b which are to be fastened to one another. When hydraulically pressurised from an external source, the bush dilates (i.e. the outer diameter increases and the inner diameter decreases) so as to produce effectively an interference fit at both outer and inner surfaces; in order to achieve this, the hydraulic frictional locking bush has an inner annular cavity c containing an annular piston d. The piston is an accurate fit radially within the cavity and at least one of the fitting surfaces of each of the cavity and piston is conical. The piston can move axially under the influence of a pressurised hydraulic fluid which may be admitted to either end of the piston depending on whether it is desired to mount or dismount the assembled components. The taper of the conical surfaces ensures that axial movement of the piston results in radial expansion or contraction of the bush. All mating surfaces are of accurate form and are assembled with slight interference to overcome leakage, even in the relaxed condition. Alternatively, annular sealing rings such as 'O' rings, or similar, may be employed. The taper of the conical surfaces is sufficiently fine to render them self-sustaining.

In order to facilitate axial movement of the piston under the very high radial loads, the oil-injection principle (previously briefly described) is utilised to provide an oil-film between the pairs of opposed surfaces e and f, where relative movement occurs.

However, it is to be noted that a single source of high-pressure fluid (which may be, for example, a high-pressure hand pump) is used to provide both the axial and radial forces simultaneously. Oilways through the piston provide a supply of hydraulic fluid to said mating surfaces e, f regardless of the side from which the annular piston is pressurised, whilst leakage to the non-pressurised side of the piston is prevented by a simple valve arrangement g. The external source of hydraulic pressure is connected to tapping h for mounting, and to tapping i for dismounting. The annular fastener l prevents axial separation of the component parts of the bush.

The valve arrangement g comprises a rod r and two balls s, t which are adapted to seat against respective valve seats in dependence upon the

3

end from which the cavity or chamber *c* is pressurised. Said valve arrangement *g* can be modified by replacing the rod *r* by a coiled compression spring (not illustrated) which tends to urge both balls *s, t*, onto their respective seats at all times, said spring force being overcome by the pumped hydraulic fluid.

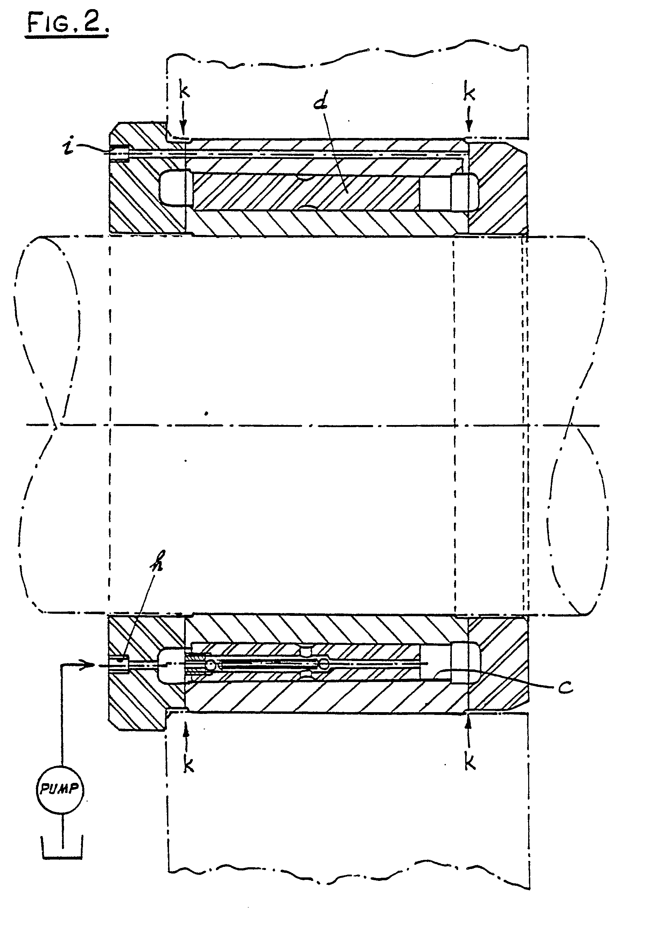

The manufacture of the hollow bush presents practical difficulties in sealing against leakage, and also in mechanical strength to resist axial loads imparted by the high hydraulic pressure. Figure 1 shows a two-part bush which has metal-to-metal skirt-type seals *j* to overcome the sealing problem. It is felt that a more effective and economical method of manufacture will be to make the bush in three parts and to employ the electron beam welding process to fuse two coaxial junctions *k* (Figure 2) simultaneously at each end of the bush. This method of welding will give minimal distortion and high strength.

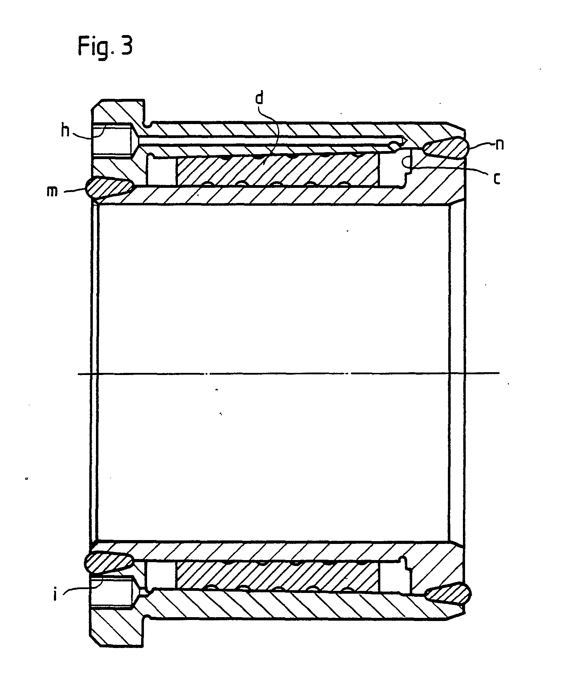

Figure 3 depicts a practical design of bush (bushing) which is made in two parts which are joined to each other by electron beam welding to form the cavity or chamber *c* for the piston *d*. The welding junctions *m* and *n* may be assembled with slight interference fit. The weld does not penetrate right through the junction and therefore the prospective problem of contamination of the cavity by weld debris is obviated. The process of electron beam welding is virtually essential to the success of this design as it gives high strength with minimal distortion.

It is also to be noted that the configuration of the bush shown in Figure 3 yields an important advantage, namely, that the degree of interference fit achieved is easily monitored and is therefore readily controllable. Thus, during mounting, a depth gauge may be inserted through the vacant dismounting oil tapping hole *i* to touch the piston *d*. The axial drive-up distance of the piston thus measured gives a direct indication of the interference fit induced.

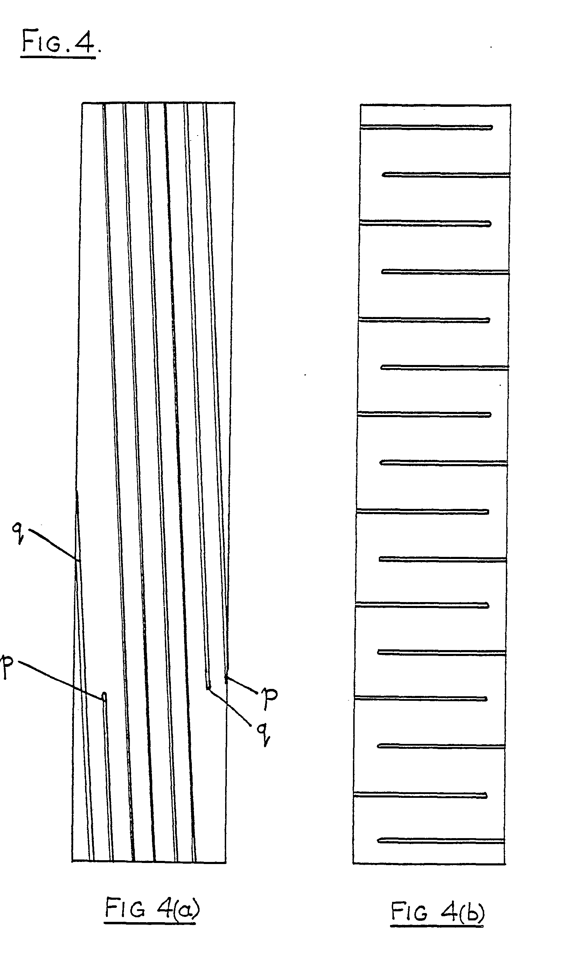

Figure 3 also does not include the valve arrangement *g* shown in Figures 1 and 2. Instead, a pair of non-intersecting helical grooves *p* and *q* (Figure 4(a)) are cut on both the external and the internal sliding surfaces of the piston. At each sliding surface, one groove of the pair runs right through into (is open at) the respective end face of the piston to be fed by oil from the cavity or chamber whilst the other end of said groove stops well short of the other end of the piston and thereby prevents leakage of the pressurised oil past the piston. The other of the two grooves is arranged in the converse manner. This arrangement gives a closed oil-feed to the sliding surfaces from each end of the piston, but without the complication of the valve arrangement *g*. As an alternative to the form shown in Figure 4(a), the helical grooves may simply be replaced by several straight axial grooves which are open at one end and closed at the other as shown in Figure 4(b); such axially extending grooves also give an oil-feed capability without any leakage.

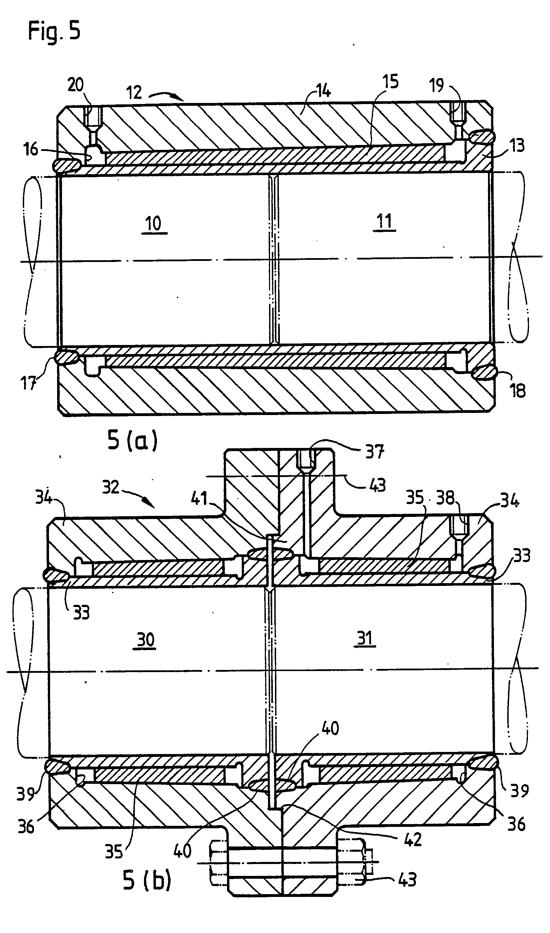

Figures 5(a) and (b) show two different versions of a coupling for joining two shafts to each other, said coupling utilising the principle underlying the present invention. In Figure 5(a), the end portions of two coaxial shafts 10, 11 are shown joined to one another by a coupling indicated generally by the reference numeral 12. The coupling 12 consists of two components 13, 14 and an annular piston 15 which is housed within an annular cavity or chamber 16; the components are joined to one another at 17, 18 by welds preferably made by the electron beam welding process. The generally axially extending internal surfaces of the chamber 16 are such as to provide a taper and the annular piston has its corresponding surfaces so formed as to provide a matching taper. A tapping 19 and an associated conduite communicate with one end of the chamber 16 and another tapping 20 and an associated conduit communicate with the other end of said chamber, the tappings 19, 20 are respectively the mounting and dismounting tappings. The component 14 has had its radial thickness increased considerably when compared with the thicknesses of the corresponding parts in Figures 1 to 3; this has been done in order to ensure that the unit as a whole will be able to restrain or absorb the hoop stresses which result from the application of hydraulic pressure by the pump. Further description of this embodiment is not considered to be necessary.

In Figure 5(b), the end portions of two coaxial shafts 30, 31 are shown joined to one another by a two-part coupling which is indicated generally by the reference numeral 32. It will be seen that each part of the coupling 32 consists of two components 33, 34 and an annular piston 35 which is housed within an annular chamber 36; the chamber and the piston taper as already described with reference to Figure 5(a). These are also tappings/conduits 37, 38 for mounting and dismounting, respectively, and welds 39, 40 as already described with reference to Figure 5(a). It should be noted that, although only the right-hand part of the coupling 32 is illustrated with its tappings/conduits 37, 38, the left-hand part is also equipped therewith and that these have not been shown for the reason that they are not in the same section plane as the ones which have been illustrated.

The right-hand part of the coupling 32 is provided with an axially projecting boss or spigot 41 which (in the assembled condition illustrated) extends into a corresponding re-entrant recess 42, thereby providing a centering and interlocking feature. The two parts of the coupling 32 are bolted together as indicated by the reference numerals 43. Further description of this embodiment is also considered to be unnecessary.

The embodiment of Figure 5(a) is suitable in locations in which, when for repair or for maintenance or for some other reason, the separation of the two shaft portions 10, 11 becomes necessary. In such a case, the coupling 12 is dismounted by appropriate operation as hereinbefore described and the slackened coupling is moved to the right or to the left so as to clear the respective shaft end portion. In cases where there is little or no room in one direction or the other for such axial sliding of the coupling along the components, the embodiment of Figure 5(b) is suitable because one need only undo and remove the bolts/nuts 43 in order to be able to separate the halves of the coupling 32 axially just far enough to disengage the boss 41/recess 42; the Figure 5(b) embodiment would be very useful, for example, in a coal mine where space is at a premium and in which for example drive heads (namely, the couplings between a gear box and the driving drum of a conveyor) need to be serviced.

The sliding action which is required of the annular piston in each of the embodiments described above with reference to the drawings is facilitated by making the piston of one material (for example, cast iron or bronze) and by making the two components which define the internal chamber of steel. This is not to say that steel for both parts would not work, especially in the big sizes but it is considered to be preferable to use dissimilar metals. In general, also it is preferred to avoid the use of any lubricant on the piston because of the welding which needs to be carried out after assembly of the piston and the two chamber-forming components.

It will be evident to engineers that the invention not only can provide a connection between two components for the purpose of the transmission of motive power but also can provide a connection between two components such as will resist axial thrust; the connection could also cope with a combination of axial thrust and torque.

Some advantages which stem from the use of a coupling according to the present invention are as follows:

(1) A torque wrench, previously required for the tightening of the ring of screws, is not required. A compact high-pressure hand pump necessary to mount and dismount the coupling is not more expensive than the torque wrench but the time saved in fitting the coupling leads to considerable economies.

(2) The amount of time which can be saved is exemplified by the following:—

Tests with a locking bush for a shaft of 100 mm diameter (first component) and a second component having a bore of 145 mm diameter have given the following results:—

Time to mount=5 minutes, approx.
Time to dismount=3 minutes, approx.
Slip torque=21000 N.m.
(83 U.K. ton inches).

(3) The torque capacity and/or the resistance to axial thrust can be significantly increased by degreasing the components before assembly.

(4) The ability to transmit torque and/or to resist axial thrust is not dependent on retaining oil at high pressure; the oil is drained out after use.

(5) The fine taper of the chamber and of the enclosed piston is such that the parts are infinitely self-sustaining.

(6) Whereas (with one known coupling which employs the oil-injection) dismounting can cause the outer one of the two tapered components to move axially along the coupled shafts very suddenly, with the result that people normally stand well clear of the coupled shafts, the coupling according to the present invention releases progressively and non-explosively. When carrying out dismounting, there is a build-up of hydraulic pressure until the first movement of the annular piston takes place; this is detected by a drop in pressure at the pump and the pumping is continued at ever-decreasing pressure until the piston has been moved back to its end position.

(7) The high torque capacity and/or high resistance to axial thrust is assured (especially with degreasing as in (3) above) because the external surfaces of the coupling are not oil-wetted.

(8) The coupling is easily dismounted and easily re-used.

(9) The degree of intereference fit obtained by the mounted coupling can be easily monitored and precisely controlled.

(10) The coupling can be used in locations where accessibility is poor because the high-pressure hand pump can be operated from a distance via lengthy connecting hoses.

(11) Mounting of the coupling is reliable and consistent; tightening occurs evenly without skewing and without the uncertain torque-friction characteristics of screws.

(12) There is no tendency of the coupling or of the clamped component(s) to make any axial movement during mounting or dismounting.

(13) The relative angular positions of components and coupling may be adjusted infinitely and yet there is zero backlash once the coupling has been mounted.

(14) The coupling has excellent self-centering characteristics.

(15) The coupling is tamperproof.

(16) The coupling has a low susceptibility to contamination because its "sealed unit" construction (the respective mounting and dismounting tappings are, of course, plugged after use to keep out foreign bodies) requires only the use of clean mineral oil.

(17) There is improved shaft strength even though the dimensions of the shaft can be reduced; this improved strength stems from the elimination of keyways, splines, cotters and so on. Moreover, there is improved fatigue life.

(18) The elimination of heavily loaded screws gives an enormous reduction in both assembly time and effort. Moreover, operators do not have to handle heavy tooling.

(19) The coupling is capable of acting, in the last resort, as an overload protection of expensive machine components against damage and this is something that keyed components could never provide. The coupling is not, however, to be used repeatedly as a form of slipping clutch.

(20) The hydraulic coupling, being mounted so simply and quickly, lends itself to an assembly line or moving track. Thus, for example, the coupling could be used where it is necessary for a flywheel to be mounted on an engine shaft; this could be done quickly and efficiently by means of an electric pump or by means of a pump which is driven by compressed air.

(21) It must be stressed that, in order to mount/ dismount a coupling according to the invention, a single source of high-pressure fluid is used; this is an advantage when compared with at least one known arrangement which employs high pressure injectors to create the necessary oil film between the respective sleeves and a low pressure pump to cause relative axial movement between said sleeves.

It is considered that the field of application is extremely wide but the following are mentioned by way of example:—

Machine tools.
Drive shafts, cranks, gears and flywheels.

Marine uses.
Propellers, couplings, rudder stocks.

Mining equipment.
Drum endplates, crusher rotors, gearbox couplings, cutting heads, winch drums.

Process machinery.
Valve stems, sprockets, levers, cams, paper machinery.

**Claims**

1. A coupling for frictionally joining two components (a, b) comprising a housing provided with at least one annular piston (d) and two working chambers (C1, C2) at each end thereof and means (h, i; 19, 20; 37, 38) for supplying fluid under pressure to said working chambers (C1, C2) to axially move said piston (d) in said housing, the housing and the piston (d) being of generally cylindrical shape and at least one of the peripheral surfaces of said piston (d) being tapered characterised in that the housing is formed as a separate self-contained assembly having a fully enclosed space (c) within which the piston (d) is arranged, the tapered surface of the piston cooperating with a mating tapered surface of the housing defining said space (c) to radially expand or contract at least one wall of the housing into contact with at least one of the two components (a, b) on axial displacement of said piston (d).

2. A coupling as claimed in Claim 1, characterised in that said coupling is a frictional locking bush having a chamber (c) housing a single annular piston (d) which is provided with conduit means and a valve arrangement (g) such as will ensure that, in use, the liquid supplied to the respective end of the chamber (c) will build up a film of said liquid between the pairs of contacting surfaces (e, f) in order to facilitate movement of the piston (d) in the respective axial direction.

3. A coupling as claimed in Claim 1, characterised in that said coupling is a frictional locking bush having a chamber (c) housing a single annular piston (d) each of whose radially inner and radially outer surfaces is provided with at least two non-intersecting grooves (p, q), each groove being closed at one end thereof and opening at the other end thereof into the chamber (c) at a respective one of the ends of the piston (d), whereby in use the liquid supplied to the respective end of the chamber (c) will build up a film of said liquid between the pairs of contacting surfaces (e, f) in order to facilitate movement of the piston (d) in the respective axial direction.

4. A coupling as claimed in Claim 3, characterised in that there are two of said non-intersecting grooves (p, q) both of which follow a helical path.

5. A coupling as claimed in Claim 3, characterised in that there is a plurality of said non-intersecting grooves (p, q) which are arranged in two sets, all of said grooves extending axially of the bush.

6. A coupling as claimed in Claim 1, characterised in that said coupling is a sleeve (12) having a chamber (16) housing a single annular piston (15) and in that there are two concentric annular members (13, 14) whose corresponding surfaces define said chamber (16), the radially outer of said annular members (13, 14) being of a thickness, radially of the sleeve, greater than that of the radially inner annular member for the purpose of absorbing the hoop stresses generated by said liquid under pressure.

7. A coupling as claimed in Claim 1, characterised in that said coupling is a sleeve (32) constituted by two parts (34) which are fastened together by fastening means (43), each of said two parts (34) having a chamber (36) housing a single annular piston (35) and each chamber having means (37, 38) uniquely associated therewith for the axial displacement of said piston (35) and in that one of said parts (34) has an axially extending annular re-entrant recess (42) into which extends a complementary axially extending annular boss (41) on the other of said parts (34).

**Patentansprüche**

1. Kuppling zum reibschlüssigen Verbinden zweier Teile (a, b), mit einem Gehäuse, das mindestens einen Ringkolben (d) aufweist, sowie zwei Arbeitskammern (c1, c2) an beiden Enden und Einrichtungen (h, i, 19, 20, 37, 38) zum Zuführen von Druckmittel zu den Arbeitskammern (c1, c2) zum axialen Verschieben des Ringkolbens (d) in dem Gehäuse, wobei das Gehäuse und der Kolben (d) eine zylindrische Form aufweisen und mindestens eine der äußeren Oberflächen des Kolbens (d) konisch ausgebildet ist, dadurch gekennzeichnet, daß das Gehäuse als separate selbständige Einheit ausgebildet ist mit einem vollständig eingeschlossenen Innenraum (c), in dem der Kolben (d) angeordnet ist, daß die konische Außenoberfläche des Kolbens mit einer zugehörigen konischen Oberfläche des Gehäuses den Raum (c) umschließt und so zusammenwirkt, daß der Kolben (d) bei axialer Verschiebung zumindest eine Wandung des Gehäuses aufweitet oder zusammenzieht bis zum Kontakt mit mindestens einem der zwei Teile (a, b).

2. Kupplung nach Anspruch 1, dadurch gekennzeichnet, daß sie als Reibungsspannbuchse ausgebildet ist mit einer Kammer (c), die einen einzigen Ringkolben (d) aufnimmt und mit Leitungen und einer Ventileinrichtung (g) versehen ist, die sicherstellt, daß bei Gebrauch die am betreffenden Ende der Kammer (c) zugeführte Flüssigkeit einen Flüssigkeits- film aufbaut zwischen dem in Kontakt stehenden Flächenpaar (e, f), um die Bewegung des Kolbens (d) in die betreffende axiale Richtung zu ermöglichen.

3. Kupplung nach Anspruch 1, dadurch gekennzeichnet, daß sie als Reibungsspannbuchse mit einer Kammer (c) und einem darin eingeschlossenen Ringkolben (d) ausgebildet ist, dessen jeweils radial innere und äußere Oberflächen mindestens zwei sich nicht kreuzende Nuten (p, q) aufweisen, wobei jede Nut an einem Ende geschlossen und am anderen entsprechenden Ende des Kolbens (d) in die Kammer (c) hinein geöffnet ist, wobei bei Gebrauch die am betreffenden Ende des Kammer (c) zugeführte Flüssigkeit einen Flüssigkeitsfilm aufbaut zwischen dem in Kontakt stehenden Flächenpaar (e, f), um die Bewegung des Kolbens (d) in die betreffende axiale Richtung zu ermöglichen.

4. Kuppling nach Anspruch 3, dadurch gekennzeichnet, daß zwei sich nicht kreuzende Nuten (p, q) vorgesehen sind, die schraubenförmige Ausbildungen aufweisen.

5. Kupplung nach Anspruch 3, dadurch gekennzeichnet, daß eine Vielzahl von sich nicht kreuzenden Nuten (p, q) vorgesehen ist, welche in zwei sich axial in der Buchse erstreckenden Gruppen angeordnet sind.

6. Kupplung nach Anspruch 1, dadurch gekennzeichnet, daß sie als Muffe (12) ausgebildet ist mit einer Kammer (16), die einen einzigen Kolben (15) umschließt, und daß zwei konzentrische Glieder (13, 14) vorgesehen sind, deren einander zugewandte Oberflächen die Kammer (16) bilden, wobei das radial äußere der beiden Glieder (13, 14) in radialer Richtung eine größere Dicke aufweist als das radial innere Glied, um die Umfangsspannung unter der Wirkung des Flüssigkeitsdruckes aufzunehmen.

7. Kupplung nach Anspruch 1, dadurch gekennzeichnet, daß sie als Muffe (32) ausgebildet ist, bestehend aus zwei Teilen (34), die mit Verbindungsgliedern (43) verbunden sind, wobei jedes der zwei Teile (34) eine Kammer (36) mit einem darin eingeschlossenen einzelnen Kolben (35) aufweist sowie fest damit verbundene Mittel (37, 38) zur axialen Verschiebung des Kolbens (35), und daß eines der Teile (34) eine axial gerichtete ringförmige Vertiefung (42) aufweist, in welche ein axialer ringförmiger Vorsprung (41) am anderen Teil (34) passend eingreift.

## Revendications

1. Accouplement pour réunir deux pièces (a, b) par friction, composé d'un boîtier avec au moins un piston annulaire (d) et deux chambres (C1, C2) à chaque extrémité, ainsi que des moyens (h, 1; 19, 20; 37, 38) pour fournir du fluide sous pression aux chambres (C1, C2) et déplacer axialement le piston (d) dans le boîtier, ce boîtier et le piston (d) ayant une forme générale cylindrique et au moins l'une des surfaces périphériques du piston (d) étant conique, caractérisé en ce que le boîtier est réalisé sous la forme d'un ensemble distinct, regroupé, ayant un volume complètement fermé (c) dans lequel se trouve le piston (d), la surface conique du piston coopérant avec une surface conique correspondante du boîtier définissant cet espace (c) pour déployer ou contracter radialement au moins une paroi du boîtier, en contact avec au moins l'un des deux composants (a, b) par déplacement axial du piston (d).

2. Accouplement selon la revendication 1, caractérisé en ce que l'accouplement est un manchon de blocage par friction ayant une chambre (c) recevant un seul piston annulaire (d) muni de conduites et d'un dispositif à soupape (g), pour qu'à l'utilisation, le liquide fourni à l'extrémité respective de la chambre (c) forme un film de liquide entre les paires de surfaces en contact (e, f) pour faciliter le mouvement du piston (d) dans la direction axiale respective.

3. Accouplement selon la revendication 1, caractérisé en ce qu'il constitue un manchon de blocage par friction ayant une chambre (c) contenant un seul piston annulaire (d) dont la surface radialement intérieure et la surface radialement extérieure comportant chacune au moins deux gorges (p, q) qui ne se coupent pas, chaque gorge étant fermée à une extrémité et/ou s'ouvrant à l'autre extrémité dans la chambre (c) à l'extrémité respective du piston (d), et lors de la mise en oeuvre, le liquide fourni à l'extrémité respective de la chambre (c) forme un film de liquide entre les paires de surfaces en contact (e, f) pour faciliter le mouvement du piston (d) dans la direction axiale respective.

4. Accouplement selon la revendication 3, caractérisé en ce qu'il comporte deux gorges (p, q) qui ne se coupent pas et ont un tracé hélicoïdal.

5. Accouplement selon la revendication 3, caractérisé en ce qu'il comporte plusieurs gorges (p, q) qui ne se coupent pas et sont réparties en deux ensembles, toutes les gorges s'étendant axialement par rapport au manchon.

6. Accouplement selon la revendication 1, caractérisé en ce qu'il est constitué par un manchon (12) ayant un chambre (16) contenant un seul piston annulaire (15) et en ce qu'il y a deux éléments annulaires concentriques (13, 14) dont les surfaces correspondantes définissent la chambre (16), l'élément annulaire (13, 14) radialement à l'extérieur, ayant dans la direction radiale du manchon, une épaisseur supérieure à celle de l'élément annulaire radialement intérieur, pour absorber les contraintes de cerclage engendrées par le liquide sous pression.

7. Accouplement selon la revendication 1, caractérisé en ce qu'il est constitué par un manchon (32) en deux parties (34) réunies l'une à l'autre par des moyens de fixation (43), chacune des deux parties (34) ayant une chambre (36) contenant un seul piston annulaire (35) et chaque chambre ayant des moyens (37, 38) associés de manière unique à la chambre, pour le déplacement axial du piston (35) et en ce que l'une des parties (34) présente une cavité (42), en retrait annulaire, s'étendant dans la direction axiale, et qui reçoit un bossage annulaire (41) complémentaire, s'étendant également dans la direction axiale et appartenant à l'autre des pièces (34).

Fig.1

# FIG. 2.

Fig. 3

FIG.4.

FIG 4(a)

FIG 4(b)

Fig. 5

5 (a)

5 (b)